(19) Europäisches Patentamt
European Patent Office
Office européen des brevets

(11) Publication number: **0 154 165**
**A2**

(12) # EUROPEAN PATENT APPLICATION

(21) Application number: 85101061.1

(22) Date of filing: 01.02.85

(51) Int. Cl.⁴: F 04 B 37/04

(30) Priority: 03.02.84 US 576838

(43) Date of publication of application: 11.09.85 Bulletin 85/37

(84) Designated Contracting States: CH DE FR GB LI LU NL

(71) Applicant: AIR PRODUCTS AND CHEMICALS, INC.
Route no. 222
Trexlertown Pennsylvania 18087(US)

(72) Inventor: Pez, Guido Peter
3705 Vale View Drive
Allentown, PA 18103(US)

(72) Inventor: Steyert, William Albert
Center Valley
Pennsylvania 18034(US)

(74) Representative: Sandmair, Kurt, Dr.
Dipl.-Ing. Schwabe Dr. Dr. Sandmair Dr. Marx
Stuntzstrasse 16
D-8000 München 80(DE)

(54) **Method for adsorbing and storing hydrogen at cryogenic temperatures.**

(57) Hydrogen is stored at cryogenic temperatures by adsorption on porous carbon having a nitrogen BET apparent surface area above about 1500 $m^2/g$. Hydrogen can be adsorbed and desorbed in the context of a cryopump, having as the pumping element a panel, having pressed porous carbon thereon.

EP 0 154 165 A2

DESCRIPTION

# METHOD FOR ABSORBING AND STORING HYDROGEN AT CRYOGENIC TEMPERATURES

## Technical Field

This invention relates to a method for storing hydrogen gas, particularly for transportation, at cryogenic temperatures. This invention further relates to a pumping element for a cryopump, particularly for removal and/or storage of hydrogen.

## Background Art

The storage of hydrogen, as a gaseous fuel for the operation of fuel cells, has been proposed by Justi, U.S. Patent 3,350,229. This reference appears to recite storage, at about -183°C and atmospheric pressure, sorption of the order of 6 mmol/$cm^3$ of porous carbon, which has an apparent density of 0.44 g/$cm^3$. This corresponds roughly to a hydrogen adsorption capacity of 13.6 mmol/g. However, this figure is derived from an imaginary "adsorption capacity", expressed in terms of $cm^3$ of hydrogen, reduced to 760 torr at 0°C, per $cm^3$ of adsorbent, measured at -183°C, cited by Jaeckel, "Kleinste Drucke ihre Messung and Erzeugung", Springer-Verlag, Berlin(1950) at page 210. Measured values for hydrogen adsorption at 1 atmosphere at cryogenic temperatures (-197°C to -185°C) of various carbons fall in a range between about 7.3 and 8.7 mmol of hydrogen/g of the carbon.

Heyland, in U.S. Patent 1.901,446, has proposed storing liquefied gases on bodies such as silica gel or charcoal, indicating that silica gel is the better adsorbent.

It has been proposed by Teitel, in U.S.Patent 4,211,537, to store hydrogen in a supply means, comprising a metal hydride hydrogen storage component and a microcavity hydrogen storage component, which in tandem provide hydrogen to an apparatus requiring hydrogen.

Woollam (U.S. Patent 4,077,788) recites storage of atomic hydrogen, at liquid helium temperatures, in the presence of a strong magnetic field, in exfoliated layered materials, such as molybdenum disulfide or graphite.

The use of porous carbon is suggested by Dietz et al. (U.S.Patent 2,760,598) for storage of liquified gases, including liquid air, hydrogen or nitrogen. Savage (U.S.Patent 2,626,930) has proposed using chemically active graphitic carbon for adsorption of gases.

Modification of carbon with metallic salts has been disclosed by Keyes (U.S.Patent 1,705,482) to produce a material appropriate for the storage of gas or liquid materials.

Hecht, in U.S.Patent 3,387,767, has recited a cryosorption pumping element for a high vacuum pump, comprising a mass of sintered fibers and sorbent powders.

Other methods proposed for the storage or transportation of hydrogen include the use of metal hydrides and chemical hydrogenation/dehydrogenation. Metal hydride systems have been investigated extensively, for example, storage of hydrogen as iron titanium hydride $FeTiH_{1.95}$, see, Reilly, "Applications of Metal Hydrides", in Andresen et al., ed., "Hydrides for Energy Storage", New York, Pergamon Press (1978).

Hydrogen can also be stored in heavy metal cylinders, so as to avoid the cost of liquifaction. However, use of cylinders is not particularly attractive economically.

There is, accordingly, a need for improved method of storing and transporting hydrogen, particularly at cryogenic temperatures.

It is an object of this invention to provide an improved method, using carbon, having a high nitrogen BET apparent surface area, for storing hydrogen for transportation or in the context of cryogenic pumping.

## Disclosure of Invention

In one aspect, this invention relates to a method for storing hydrogen under cryogenic temperatures, comprising adsorbing hydrogen on porous carbon, having a nitrogen BET apparent surface area above about 1500 $m^2/g$.

This invention further relates, in high vacuum pump comprising a cryosorption pumping element and means for cooling the pumping element to the cryogenic temperature range, to the improvement wherein the pumping element comprises porous carbon, having a nitrogen BET apparent surface area above about 1500 $m^2/g$.

This invention further relates to a panel assembly for a cryoadsorption pump, comprising a high thermal conductivity metal panel adapted for cooling by a cryogenic fluid, the metal panel having mounted thereon a plate of porous carbon having a nitrogen BET apparent surface area above 1500 $m^2/g$.

The surface area of carbon adsorbents is essentially controlled by the graphitic structure of the carbon. In an ideal system, one atom of adsorbate if adsorbed between two layers of graphite. The carbon atoms of graphite are arranged in planar layers, approximating a polycyclic aromatic of unlimited extent. The carbon atoms are arranged in a hexagonal pattern, each carbon atom being connected to three other carbon atoms by bonds of equal length, disposed at an angle of 120° with respect to each other. The bond length is about 1.415 Å. These assumptions permit calculation of a total area, on both sides of an isolated sheet one atom thick, of 2610 square meters per gram. For the case of absorbate, adsorbed between two layers of graphite, the maximum surface area would be about 1300 $m^2/g$.

However, the measured areas of the Amoco carbons, described below, which can be used in the practice of this invention, exceed this estimate, based on a geometrical maximum. On initial consideration, it is difficult to understand how a structure can have a higher surface area than "theoretically" possible.

This apparent anomaly can be explained by the fact the the "measured" surface area of an adsorbent may not, in certain cases, represent an area determinable by direct measurements. The surface area is determined, instead, by the almost universally-used BET method, which is based on a theoretical model describing adsorption of a vapor on an isolated flat surface. See, Brunauer et al., J.Am.Chem.Soc., vol. 60(1938) at 309.

The measurement actually made is that of nitrogen adsorption, at very low temperatures, over a range of pressures. The raw data are processed by an equation, developed from the model, which yields a resulting area, corresponding to the area of the isolated flat surface of the model.

Although the assumptions used have been criticized, it should be kept in mind that nitrogen BET "apparent surface area" measurements generally agree with values of surface areas, obtained by other methods. These methods include those approaching actual physical measurement of area, such as direct microscopic observation of adsorption on glass spheres and geometric measurements on single crystals of metals. In view of their simplicity and reliability, generally, BET apparent surface areas are widely accepted without necessarily appreciating or clearly stating their indirect nature.

It is proposed that, in materials like the Amoco carbons, there are regions in which two carbon surfaces are close enough to each other that adsorption or condensation of hydrogen/nitrogen occurs in a fashion more complex, than predicted using the BET model. Values, obtained by the standard calculations, may accordingly be substantially higher than "actual" surface area, on which condensation is occurring. As a result, carbons having unusually high nitrogen BET apparent surface areas may also have unusually high adsorptive capacities.

Porous carbons, which may be used in the practice of this invention, are those having a nitrogen BET apparent surface area above 1500 $m^2/g$. Among materials which meet this requirement are the so-called Amoco carbons, described in Wennerberg et al., U.S. Patent 4,082,694, herein incorporated by reference. These carbons are made from coal and/or coke by admixture with hydrous potassium hydroxide and are characterized by a very high surface area and a substantially cage-like structure, exhibiting microporosity. The products described by Wennerberg et al. have an apparent surface area (nitrogen BET) of 1800-3000 $m^2/g$ for coal-derived carbons and of 3000-4000 $m^2/g$ for coke-derived carbons.

Another type of high surface area carbon useable in the practice of this invention is derived from polyvinylidene chloride. A material obtained by heating polyvinylidene chloride at 850°C in an inert gas to produce a char and further heating in an oxidizing atomsphere of $CO_2$ at 850°C to a burn-off of 24%, has a nitrogen BET apparent surface area above 2300 $m^2/g$. Similarly high surface areas are obtained by burn-off of thus-prepared carbon at 1000°C. See, Lamond et al., Carbon, vol. 1 (1963) at page 295.

An additional carbon, having the requisite surface area, is made from polyfurfuryl alcohol by heating at 850°C. in an inert gas and further heating in carbon dioxide to a burn-off of at least 67%. See, Lamond et al., Carbon, vol. 3 (1964) at page 283.

The unpredictability of adsorption properties of typical carbons is apparent from Fig. 1, which shows hydrogen adsorption (Gibbs excess adsorption, $N_E$), reported in the literature, as a function of pressure at -197°C. Gibbs excess adsorption, $N_E$, is the excess material present in the pores beyond that which would be present under the normal density at the equilibrium pressure, Kidnay, Adv. Cryogenic Engineering, vol. 12 (1967) at page 730.

Total pore adsorption, $N_T$, is accordingly:

$$N_T = N_E + N_B$$

wherein $N_B$ is the amount of hydrogen which can be held, at normal density and equilibrium pressure, in the free pore volume remaining after adsorption. In relating $N_E$ to $N_T$, it was assumed that the free pore volume is the measured pore volume of adsorbent ($cm^3$/g of carbon) minus the total molecular volume of hydrogen adsorbed at a given pressure. The molecular volume of hydrogen was calculated using the value of the constant b (0.02661 L/mole) from van der Waal's equation.

The behavior of coconut shell charcoal, Barneby-Cheney type IG-1, with a surface area about 1020 $m^2$/g, is shown in line (1), Kidnay et al., supra.

The adsorption of Carbotox, a pure charcoal (Lurgi Gesellschaft) is noted at point (2), Van Itterbeek et al, Physica, vol. 4 (1937) at page 389 and that of Fisher coconut charcoal, having a surface area about 1100 $m^2$/g at point (3), Basmadjian, Can. J. Chem., vol. 38 (1960) at page 141.

Line (4) shows the reported behavior of coconut charcoal, Barneby-Cheney type GI (surface area 1200-1400 $m^2$/g), Tward et al., Proc. Int. Cryog. Eng. Conf. (9th), (1982) at page 34.

Adsorption of hydrogen by Carbopol $H_2$ is shown in line (5), Czaplinski et al., Przemysl Chemiczny, vol 37 (1958) at page 640, and that of Degussa activated carbon F12/300 (assumed surface area 1125 $m^2$/g) is shown by line (6), Carpetis et al., Int. J Hydrogen Energy, vol. 5 (1980) at page 539.

At -185.8°C, Columbia 6-G coconut shell activated carbon adsorbed 7.9 mmole of hydrogen/gram of carbon at 1 atmosphere, Maslan et al., Separation Science, vol. 7 (1972) at page 601.

It is seen that some presently-used carbons are relatively good adsorbents, the Degussa carbon having the highest hydrogen capacity at -196°C reported to the present. At 10 atm hydrogen pressure, the Degussa carbon had a Gibbs excess adsorption of about 3 g hydrogen/100 g of carbon, or a total pore adsorption capacity, $N_T$, of about 3.5 g of hydrogen/100 g of carbon. However, the points and the lines in Fig. 1 also show that there is no precise correlation between surface area and hydrogen adsorption and that adsorption properties are unpredictable and must be determined experimentally.

It has been found that the properties of high surface area carbons, useful in the practice of this invention, are influenced by processing of the carbons, prior to use. Carbons in accordance with Wennerberg et al. '694 have a high alkali content. It is preferred that this be removed by extraction with water, after which the carbon is dried in air.

Various methods of pretreating water-leached Amoco carbon were studied. It is preferred, to preserve the high surface area, to treat the air-dried carbon with a stream of nitrogen gas at 400-600°C until no further condensible materials are detected in the effluent stream.

Adsorption behavior of thus-prepared carbons, which have a nitrogen BET apparent surface area of 2900-3000 $m^2/g$, is shown in Fig. 2. The upper line, 2-1, is the hydrogen adsorption isotherm at -196°C (liquid nitrogen) and the lower line, 2-2, represents the hydrogen adsorption isotherm at -186°C (liquid argon). It will be apparent that adsorption is markedly affected by pressure, whereas adsorption for some prior art carbons, e.g., coconut charcoal (Fig. 1, line 1) is not.

It was found that treatment of carbons of Wennerberg et al. '694 with hydrogen at 600°C reduced the oxygen content of the sample, but was accompanied by a decrease in surface area, pore volume and hydrogen adsorption. It is proposed that treatment with hydrogen led to elimination of some of the fine pores, initially present in the sample.

Slow gasification of carbons of Wennerberg et al. '694 with hydrogen was attempted, so as to amplify the surface area and pore volume. It was surprisingly found, after treatment at 800°C to a weight loss of 32%, that the pore volume was increased (from 1.47 to 2.07 $cm^3/g$), with only a small decrease in surface area. However, the cryosorption properties of this sample were considerably poorer than of the nitrogen-treated sample. These results suggest that hydrogen treatment led to expansion of large pores, but not of the micropores, which are thought to be the major site of hydrogen adsorption.

Treatment of Wennerberg et al. '694 carbons with potassium in liquid ammonia and with lithium led to products which had lower hydrogen capacities than for the nitrogen-treated sample. These results were unexpected in view of reports that intercalation compounds of potassium in graphite interact with hydrogen at -210 to -77°C, Watanabe et al., Proc. R. Soc. Lond., vol. A333 (1973) at 51.

Cryogenic temperatures contemplated for the purposes of this invention are below -100C°. More preferably, these temperatures are below about -150°C. It is preferred that the porous carbon have a surface area above about 2000 $m^2$/gram. More preferably, the porous carbon will have a nitrogen BET apparent surface area

above about 2300 $m^2/g$ and a bulk density above about 0.25 $g/cm^3$. A most preferred, porous carbon has a cage-like structure which contributes to over 60% of its surface, as measured by phase contrast, high resolution spectroscopy. These particularly preferred carbons can be made by treating a carbonaceous feed with hydrous potassium hydroxide in an amount of 0.5-5 weights per weight of carbonaceous feed; precalcining the mixture of hydrous potassium hydroxide and carbonaceous feed at 315-482°C for 15 min-2 hr and calcining the thus pre-calcined feed at 704-982°C for 20 min-4 hr under an inert atmosphere.

A further attribute of the porous carbons, used in the practice of this invention, is their unexpectedly high adsorptive capacity at very low pressures, particularly below about 10 torr. It is therefore preferred to utilize these carbons under pressures below about 10 torr, more preferably below $10^{-2}$ torr and, most preferably, below $10^{-4}$ torr.

In low pressure application, the porous carbons of this invention can be used as pumping elements in high vacuum pumps comprising a cryosorption pumping element and means for cooling the pumping element. Preferably, the pumping element will be a panel, having pressed porous carbon thereon. It will be understood that pumping elements can have a variety of configurations, encompassed by the term "panels," and that the configurations contemplated are not intended to be limited to planar structures.

In a plate assembly for cryoadsorption pumps, as disclosed by Hecht, supra, or by McFarlin in U.S. Patent 4,325,220, both incorporated herein by reference, the porous carbon can be mounted on a panel in the form of a pressed powder or, more preferably, mounted in the form of pellets.

Another type of panel structure is that disclosed by Longsworth, U.S. Patents 4,150,549, 4,219,588 and 4,277,951, herein incorporated by reference. This structure is further disclosed by Longsworth, "Performance of a Cryopump Cooled by a Small Closed-Cycle 10K Refrigerator," Advances in Cryogenic Engineering, vol. 23, Plenum Press, New York (1978), at pages 658-668. The pumping surface comprises one or more nested cylindrical surfaces, on which a gas adsorbing material is porous carbon. This configuration is preferred for pumping elements of the invention.

An unexpected property of cryogenic pump elements made in accordance with the teachings of this invention is that the high surface area carbons adsorb at considerably more hydrogen than would be predicted from the ratios of surface areas of prior art carbons and those used here. This is apparent from Figs. 4 and 5.

In Fig. 4 is shown cryopump adsorption of hydrogen on coconut charcoal. This carbon adsorbed about 1.9 SL of hydrogen, before occurrence of a marked drop in adsorption rate. Total hydrogen adsorption for this panel was about 2.3 SL. However, the high surface area carbon, as shown in Fig. 5, adsorbed of the order of 11.4 SL of hydrogen before the adsorption rate dropped to half its initial value.

The standard coconut charcoal (estimated 27 g/panel, surface area about 929 $m^2/g$) adsorbed about 1.9 SL of hydrogen before the absorption rate dropped to half its starting value. The high surface area Amoco carbon (estimated 40 g/panel, surface area 2340 $m^2/g$) adsorbed about 11.4 SL of hydrogen. This amount is about 2.5 times that predicted from surface area measurements and about four times that predicted on a weight basis.

Thus, typical highly porous carbons preferred for the practice of this invention adsorb about 2.5 times as much hydrogen per panel, or about 1.6 times as much hydrogen per unit weight of carbon, as would be predicted on the basis of the surface area of the carbon. The greatly enhanced adsorption properties of cryopump elements in accordance with the invention means that a cryopump can be operated for much longer periods, prior to shut down for regeneration, than possible heretofore.

Application of the principles of this invention to the storage of hydrogen is significant because it will be economically competitive with either liquid hydrogen storage or bulk hydrogen storage. When liquid hydrogen is stored, a major cost factor is that incurred by the liquefaction process. For bulk hydrogen storage, high expenses are incurred in producing the compressed gas and in transporting the gas in heavy steel cylinders. Both of these expensive requirements are mitigated by the use of high surface area porous carbons.

In evaluating the feasibility of using the teachings of this invention for hydrogen transport, total hydrogen capacity of the vessel containing the cryo-adsorbent is considered. The bulk density of a preferred carbon, treated at 500°C with nitrogen, is about 0.285 $g/cm^3$ and the specific volume is about 3.48 $cm^3/g$. It is thought this volume typically comprises 10.7% of carbon (d = 2.68 $g/cm^3$), 42.2% pore volume and 47.0% interparticle void. This carbon will accordingly have the following hydrogen storage capacity at -196°C, in mmol/g:

| | P = 1 atm | P = 10 atm | P = 20 atm |
|---|---|---|---|
| $H_2$ adsorbed, $N_E$ | 13.3 | 22.8 | 25.4 |
| $H_2$ in micropores (not adsorbed) | 0.3 | 2.6 | 5.3 |
| $H_2$ in interparticle void | 0.2 | 1.4 | 2.6 |
| Total (mmol/g) | 13.8 | 26.8 | 33.3 |
| Total (g $H_2$/100 g of C) | 2.78 | 5.40 | 6.71 |

It will be apparent that the adsorbents used in the practice of this invention have significantly higher storage capacities at high pressures (10 atm) than the best known carbon of the prior art.

## Brief Description of the Drawings

In Fig. 1 are shown adsorption isotherms for prior art carbons at about 77°C.

In Fig. 2 are shown adsorption isotherms for a high surface area carbon, used in the practice of this invention.

In Fig. 3 is shown variation of isosteric heat of adsorption of a typical carbon of the invention, at -196° C to -186°C.

In Figs. 4 and 5, respectively, are shown behavior of coconut charcoal and a high surface area carbon as adsorbents for hydrogen in a cryopump element.

## Best Mode for Carrying Out the Invention

In a most preferred aspect, porous carbons used in the practice of this invention are those having a nitrogen BET apparent surface area above about 2000 $m^2/g$ and a bulk density above about 0.25 $g/cm^3$. Most preferably, such a porous carbon will have a cage-like structure which contributes to over 60% of its surface, as measured by phase contrast, high resolution microscopy. The porous carbon can be made by treating a carbonaceous feed with hydrous potassium hydroxide in an amount of 0.5-5 weights per weight of carbonaceous feed; precalcining the mixture of hydrous potassium hydroxide and carbonaceous feed at 315-482°C for 15 min-2 hr and calcining the thus pre-calcined feed at 704-982°C for 20 min-4 hr under an inert atmosphere.

Most preferred utilization conditions are at pressure below $10^{-2}$ torr.

A most preferred configuration for a pumping element is a cylindrical panel, having pressed porous carbon thereon.

Without further elaboration, it is believed that one skilled in the art can, using the preceding description, utilize the present invention to its fullest extent.

The following preferred specific embodiments are, therefore, to be construed as merely illustrative and not limitative of the remainder of the disclosure in any way whatsoever. In the following examples, the temperatures are set forth uncorrected in degrees Celsius. Unless otherwise indicated, all parts and percentages are by weight.

Example 1

Super Sorb grade PX-21 carbon (Amoco Research Corp., Chicago, Ill., lot 78-10) had the following properties, tested in accordance with Wennerberg et al., U.S. Patent 3,833,514, herein incorporated by reference:

| | |
|---|---|
| SOCo BET surface area, $m^2/g$ | 3792 (old), 3369 (new) |
| Digisorb BET surface area, $m^2/g$ | 3143 |
| Pore volume: | |
| pores $>20$ Å diam, $cm^3/g$ | 0.8029 |
| pores $<20$Å diam, $cm^3/g$ | 1.48 |
| Average pore diameter, Å | 24.638 |
| Bulk density, $g/cm^3$ | 0.345 |
| pH of carbon | 4.0 |
| Ash, wt % | 2.94 |
| Water solubles, wt % | 2.25 |

This material was extracted in a Soxhlet extractor until no more potassium was removed. After the extracted carbon was dried in air, it was placed in a quartz tube and heated in a stream of nitrogen gas at 500°C until no condensible volatiles were detected in the effluent gas stream. The resulting carbon was handled and stored under an inert atmosphere. The thus-prepared sample had a nitrogen BET apparent surface area of 2888 $m^2/g$ at liquid nitrogen temperature, determined using a Micromeritics Digisorb apparatus. The total pore volume of the carbon was taken as equal to the volume of liquid nitrogen contained in the carbon pores at the saturation point.

Hydrogen adsorption isotherms up to about 30 atm (absolute pressure) were measured at -196°C (liquid nitrogen) and -186°C (liquid argon) using a conventional volumetric apparatus, consisting of a basic steel mainfold, Heise dial gauge (0-6000 kPa), MKS diaphragm gauge (1-10,000 mm Hg), Töpler pump for pumping noncondensible gases and a high vacuum source ($< 5x10^{-6}$ torr). The carbon sample being tested was held in a steel vessel (30 $cm^3$, 2.54 cm inner diam) sealed with Conoseal (Aeroquip Corp.) steel flanges and gaskets. The vessel contained a porous metal disc to minimize the loss of carbon during outgassing. The manifold and pressure gauges were thermostatted as appropriate. The sample vessel was held at the required cryogenic temperature using liquid nitrogen (-196°C) or liquid argon (-186°C).

Prior to making the adsorption measurements, the carbon was outgassed overnight under a vacuum of $< 5 \times 10^{-6}$ torr. Helium was used for dead volume measurements and adsorption of hydrogen at various pressures was measured.

The isotherms were calculated, using the virial equation:

$$PV = nRT \times (1 + Bn/V + Cn^2/V^2),$$

using values for the virial coefficients B and C taken from Dymond et al., "The Virial Coefficients of Gases," Clarendon Press, Oxford (1969) at 158 for hydrogen and at 174 for He.

Experimental data at -196°C and -186°C are presented in Tables 1 and 2, respectively, and in Fig. 2. Results in Table 1 were checked by measuring the amount of hydrogen desorbed with decreasing pressure.

Hydrogen adsorption isotherms were fitted by the least squares procedure to the empirical equation:

$$P = \frac{1}{K} \cdot \frac{N_E}{(S - a\,N_E)^a}$$

In Fig. 2, the amount of hydrogen adsorbed, $N_E$, (Gibbs excess adsorption) is plotted against hydrogen pressure. At -196°C, hydrogen adsorption was 13.3, 22.8 and 25.4 mmol $H_2$/g of carbon at 1, 10 and 20 atm $H_2$, respectively. Total hydrogen storage capacity, including all of the hydrogen in a vessel containing cryo-adsorbent, was about 5.4 g of $H_2$/g of carbon at 10 atm and -196°C.

The data of Tables 1 and 2 were used used to calculate isosteric heat of adsorption (q), defined by the equation:

$$q = \frac{R \ln P_2/P_1}{1/T_1 - 1/T_2}$$

Results are shown in Fig. 3, in which q in cal/mol is plotted against $N_E$ in mmol $H_2$/g of carbon. As shown from the figure, isosteric heat of adsorption varies from about 1000 cal/mol to 1260 cal/mol, at higher levels of adsorption.

Table 1

Hydrogen Adsorption on Amoco Carbon at -196°C

| P (atm) | $N_{Ee}$ (mmol) | $N_{Ec}$ | $N_{Ee} - N_{Ec}$ | $\frac{N_{Ee} - N_{Ec}}{N_{Ee}} \times 100$ |
|---|---|---|---|---|
| 0.0925 | 4.4625 | 4.2666 | 0.1959 | 3.490 |
| 0.4847 | 10.0593 | 10.2495 | -0.1902 | -1.8912 |
| 1.1159 | 13.7799 | 13.8309 | -0.0510 | -0.3701 |
| 7.9655 | 22.2604 | 22.0309 | 0.2295 | 1.0308 |
| 5.7401 | 20.8577 | 20.7459 | 0.1118 | 0.5360 |
| 20.0296 | 25.4327 | 25.4000 | 0.0327 | 0.1285 |
| 15.1937 | 24.4252 | 24.4304 | -0.0052 | -0.0213 |
| 10.0222 | 22.8218 | 22.9053 | -0.0835 | -0.3658 |
| 5.1468 | 20.2098 | 20.3086 | -0.0988 | -0.4891 |
| 2.5512 | 17.1858 | 17.3997 | -0.2139 | -1.2449 |
| 0.3217 | 8.4313 | 8.5731 | -0.1418 | -1.6823 |
| 0.9026 | 12.8225 | 12.9091 | -0.0866 | -0.6753 |
| 7.2986 | 21.8937 | 21.6922 | 0.2015 | 0.9203 |
| 21.3817 | 25.7433 | 25.6241 | 0.1192 | 0.4631 |
| 33.8219 | 26.8765 | 27.1414 | -0.2649 | -0.9856 |

K = 0.246015 D -09

A = 4.9020

S = 220.2911

$N_{Ee} = N_{E(exp)}$

$N_{Ec} = N_{E(calc'd)}$

Table 2

Hydrogen Adsorption on Amoco Carbon at -186°C

| P (atm) | $N_{Ee}$ (mmol) | $N_{Ec}$ | $N_{Ee} - N_{Ec}$ | $\frac{N_{Ee} - N_{Ec}}{N_{Ee}} \times 100$ |
|---|---|---|---|---|
| 0.8168 | 8.3413 | 8.4833 | -0.1420 | -1.7019 |
| 7.1478 | 18.0389 | 17.8808 | 0.1581 | 0.8765 |
| 20.5329 | 22.1506 | 22.4140 | -0.2634 | -1.1889 |
| 14.5176 | 20.9099 | 20.9559 | -0.0460 | -0.2198 |
| 10.0716 | 19.2618 | 19.3826 | 0.1208 | 0.6720 |
| 5.1912 | 16.3767 | 16.4644 | -0.0877 | 0.5354 |
| 2.5907 | 13.1335 | 13.3751 | -0.2416 | -1.8394 |
| 0.3118 | 5.0346 | 5.0559 | -0.0214 | -0.4248 |
| 0.1999 | 3.9307 | 3.7897 | 0.1410 | 3.5862 |
| 0.5258 | 6.7453 | 6.8127 | -0.0673 | -0.9982 |
| 1.0313 | 9.3932 | 9.4229 | -0.0297 | -0.3158 |
| 7.7633 | 18.6461 | 18.2445 | 0.4016 | 2.1540 |
| 16.4259 | 22.1856 | 21.9624 | 0.2232 | 1.0060 |
| 28.9859 | 23.7065 | 23.8266 | -0.1201 | -0.5068 |

K = 0.250997D - 13

A = 6.0179

S = 319.5227

$N_{Ee} = N_{E(exp)}$

$N_{Ec} = N_{E(calc'd)}$

Example 2

Modification of Amoco carbon was studied in order to correlate adsorption properties with modification.

An Amoco carbon sample, extracted with water and dried in air at room temperature, contained 1.2% ash and about 10% oxygen. As a result of heating this sample under a stream of nitrogen at 500°C, the oxygen content was lowered to 6.2%. The nitrogen BET apparent surface area, measured with nitrogen at -195.7°C, of a sample treated in this way was about 2900-3000 $m^2/g$. Pore volume ranged from 1.47 to 1.7 $cm^3/g$.

Properties of other samples, treated in various ways, are given in Table 3.

Example 3

Hydrogen adsorption was determined at -196°C for samples prepared in Example 2. As shown in Table 4, the carbon with the highest adsorptive capacity was that obtained by treating the sample received (batch 78-10) in a stream of nitrogen at 500°C until no further volatiles were obtained. Although a similarly-treated sample of another batch (79-1) had a higher pore volume than the first sample, the level of hydrogen adsorption under cryogenic conditions was essentially the same. These results suggest that the relationship between adsorption and pore volume is not clearly understood at the present time.

A sample treated with hydrogen at 600°C and then treated under vacuum ($<10^{-5}$ torr) at 900°C had a lower surface area than the nitrogen-treated samples but a similar pore volume. However, the oxygen content of this sample was reduced to about 1.4%. It is proposed that the reaction with hydrogen caused elimination of some fine pores.

Attempts to improve the surface area and pore volume of the carbon by slow gasification with hydrogen at 800°C, to a weight loss of 32%, produced a material with higher pore volume (2.07 $cm^3/g$) and only slightly decreased surface area (2790 $m^2/g$). However, the product adsorbed less hydrogen under cryogenic conditions than the starting material. It is proposed that treatment with hydrogen caused expansion of larger pores, but not of the micropores, which are thought to be largely responsible for hydrogen adsorption.

Table 3

Hydrogen Adsorption ($N_T$) in mmol/g of Adsorbent on Treated Amoco Carbons and Zeolites

| Sample | BET ($N_2$) $m^2/g$ | Pore Vol. $cm^3/g$ | Gas Adsorbed at -196°C (mmol/g) 1 atm | 10 atm | 20 atm |
|---|---|---|---|---|---|
| Amoco carbon (lot 78-10) nitrogen, 500°C; 5.2% oxygen | 2888 | 1.472 | 13.3 | 22.8 | 25.4 |
| Amoco carbon (lot 79-1) 500°C, nitrogen | 3040 | 1.708 | 12.5 | 22.4 | 25.0 |
| Amoco carbon (lot 78-10) 900°C, hydrogen to 32% weight loss | 2366 | 1.667 | 10.5 | 19.8 | 21.6 |
| Amoco carbon (lot 78-10) 800°C with hydrogen to 32% weight loss | 2793 | 2.075 | 11.5 | 19.0 | 20.9 |
| Amoco carbon (lot 78-10) 900°C under vacuum; 1.5% oxygen | 2512 | 1.288 | 12.7 | 19.3 | 20.5 |
| Amoco carbon (lot 78-10) 600°C, hydrogen; 900°C, vacuum; doped with 7.8% Li | 1606 | — | 8.0 | 8.7 | 7.5 |
| Amoco carbon (lot 78-10) 600°C, hydrogen; doped with 13.5% K; 1.4% oxygen | 2525 | 1.333 | 11.7 | 16.8 | 16.3 |
| Y-Zeolite LZ-Y82 400°C, vacuum | 625 | — | 2.0 | 4.7 | 5.0 |
| Li/L3Z Zeolite 400°C, vacuum | — | — | 3.6 | 5.6 | 5.4 |

Table 4

Effect of Modification of Adsorbents on Adsorption of Hydrogen at -196°C

| Adsorbent | BET ($N_2$) | $H_2$ Adsorption, 10 atm | | $H_2$ Adsorption, 20 atm | |
|---|---|---|---|---|---|
| | $m^2/g$ | mmol/g | $mmol/m^2$ | mmol/g | $mmol/m^2$ |
| Coconut charcoal | 1020 | 10.1 | 9.90 | 10.5 | 10.29 |
| Amoco carbon (78-10) | 2888 | 22.8 | 7.89 | 25.4 | 8.80 |
| Amoco carbon (79-1) | 3040 | 22.4 | 7.37 | 25.0 | 8.22 |
| Amoco carbon (78-10) | 2366 | 19.8 | 8.37 | 21.6 | 9.13 |
| Amoco carbon (78-10) | 2793 | 19.0 | 6.80 | 20.9 | 7.48 |
| Amoco carbon (78-10) | 2512 | 19.3 | 7.68 | 20.5 | 8.16 |
| Amoco carbon (78-10) | 1606 | 8.7 | 5.42 | 7.5 | 4.67 |
| Amoco carbon (78-10) | 2525 | 16.8 | 6.65 | 16.3 | 6.46 |
| Y Zeolite LZ-Y82 | 625 | 4.7 | 7.52 | 5.0 | 8.00 |

Samples containing an alkali metal (lithium) were prepared by treating the carbon samples with hydrogen at 600°C and then with potassium in liquid ammonia at about 20°C. The resulting solid samples were dried under vacuum at 300°C, and then used without any further purification. A lithium-doped carbon was also prepared. Neither of these materials was better than the carbon, untreated except with nitrogen at 500°C. Accordingly, the effect of alkali metal intercalation on hydrogen cryosorption is not clearly understood.

Example 4

Densification of Amoco carbon samples was attempted so as to provide an adsorbent providing for maximum hydrogen storage per unit volume.

The material received from Amoco had a bulk density of about 0.3 $cm^3/g$. Interparticle void volume of this material was about 47% of the total volume of carbon.

Samples of this carbon in a 20 mm diameter steel dye were compressed under a force of 20,000 pounds. The pressing procedure was repeated with Amoco carbons, mixed with various binders. After the materials had returned to ambient pressure, the density, surface area and pore volumes were determined.

The following results were obtained:

| Treatment | Density ($g/cm^3$) | BET Surface Area ($m^2/g$) | Pore Volume ($cm^3/g$) |
|---|---|---|---|
| Amoco C (control) | 0.285 | 2966 | 1.548 |
| Pressed (41,000 psi) | 0.406 | 2586 | 1.359 |
| + 10% bentonite, pressed | 0.503 | 2365 | 1.276 |
| + 15% bentonite, pressed | 0.447 | — | — |
| + 10% boric acid, pressed | 0.422 | — | — |

These results show that moderate compaction was accomplished and that the interparticle void was reduced from 47% to about 30% of the total volume. The sample loaded with 10% of bentonite clay had properties close to theoretical density, having only about 8% of interparticle void, calculated on the assumption that the density of clay is the same as that of "real" carbon density (about 2.68 $g/cm^3$). The results also showed that densification of the carbon brought about decrease in the nitrogen BET apparent surface area and pore volume. Consequently, some decrease in hydrogen cryoadsorption capacity may be expected when densified carbon samples are used.

Example 5

The evaluation of two adsorbents in a cryopump was done in accordance with the following procedure: In the first evaluation Calgon coconut charcoal in the form of granules (10 x 20 mesh and having a nitrogen BET apparent surface area of about 929 $m^2/g$) was mounted with the aid of an adhesive onto a standard cryopump panel, having an area of 458 $cm^2$. In the second evaluation, the Calgon coconut charcoal was replaced by Amoco carbon Type GX31 (lot 79-9) in the form of pellets (6 x 31 mesh, on an as received basis and having a nitrogen BET apparent surface area of 2340 $m^2/g$).

The evaluations were done using each of the foregoing panels in an HV-202-82 cryopump, admitting hydrogen at a constant flow rate and measuring resulting pressure. A mass flow rate of 10 $scm^3/min$ (0.127 TL/s) and a speed of 2000 L/s means that the cryopump maintained a pressure of 0.127/2000 = $6.3 \times 10^{-5}$ Torr. Pumping speed was constant, and determined by geometry, until the adsorbent began to become saturated and hydrogen began to rebound, rather than being adsorbed when it contacted the adsorbent. The flow rate, used during the test, was selected so that hydrogen migrated to the interior of the adsorbent almost as fast as it was adsorbed on the surface. Slightly higher speeds were observed after the flow of gas was interrupted, because more open sites were available at the surface of the adsorbent.

Results are shown in Fig. 4 for prior art coconut charcoal and in Fig. 5 for the Amoco carbon. From these figures, it is clear that the prior art charcoal adsorbed 1.9 SL of hydrogen before the speed dropped to half its initial value. The Amoco charcoal adsorbed 11.4 SL of hydrogen, before the speed dropped to half its initial ratio. Thus, the Amoco carbon adsorbed about six times as much as the prior art charcoal. This result is surprising in view of approximately 2.5:1 ratios of nitrogen BET apparent surface areas for the carbon samples being tested.

After these evaluations, attempts were made to estimate the actual amounts of the respective carbons on the panels. The adsorbent carbons were removed from a representative unit area of the panel, taking care to detach most of the carbon and also to minimize the removal of the adhesive, and were subsequently weighed. The amounts of carbon used in each panel were thus estimated to be 27 g for the coconut charcoal panel and 40 g for the Amoco carbon panel, respectively.

The preceding examples can be repeated with similar success by substituting the generically or specifically described reactants and/or operating conditions of this invention for those used in the preceding examples.

From the foregoing description, one skilled in the art can easily ascertain the essential characteristics of this invention and, without departing from the spirit and scope thereof, can make various changes and modifications of the invention to adapt it to various usages and conditions.

Claims

1. In a high vacuum pump comprising a cryosorption pumping element and means for cooling the pumping element to the cryogenic temperature range, the improvement wherein the pumping element comprises porous carbon having a nitrogen BET apparent surface area above about 1500 $m^2/g$.

2. The pump of claim 1, wherein the porous carbon has a nitrogen BET apparent surface area above about 2000 $m^2/g$.

3. The pump of claim 1, wherein the porous carbon has a nitrogen BET apparent surface area above about 2300 $m^2/g$ and a bulk density above 0.25 $g/cm^3$.

4. The pump of claim 1, wherein the porous carbon has a nitrogen BET apparent surface area greater than 2300 $m^2/g$, a bulk density greater than about 0.25 $g/cm^3$ and a cage-like structure which contributes to over 60% of its surface, as measured by phase contrast, high resolution microscopy.

5. The pump of claim 1, wherein the porous carbon has a nitrogen BET apparent surface area greater than 2300 $m^2/g$ and a bulk density above 0.25 $g/cm^3$, made by treating a carbonaceous feed with hydrous potassium hydroxide in an amount of 0.5-5 weights per weight of carbonaceous feed; precalcining the mixture of hydrous potasssium hydroxide and carbonaceous feed at 315-482°C for 15 min-2 hr and calcining the thus pre-calcined feed at 704-982°C for 20 min-4 hr under an inert atmosphere.

6. The pump of claim 1, wherein the pumping element is a panel, having pressed porous carbon thereon.

7. A panel assembly for a cryoadsorption pump, comprising a high thermal conductivity metal panel adapted for cooling by a cryogenic fluid, the metal panel having mounted thereon porous carbon having a nitrogen BET apparent surface area above 1500 $m^2/g$.

8. The panel of claim 7, wherein the porous carbon has a nitrogen BET apparent surface area above about 2000 $m^2/g$.

9. The panel of claim 7, wherein the porous carbon is affixed to the metal panel by pressing.

10. The panel of claim 7, wherein the porous carbon is applied to the metal panel in the form of pellets.

11. The panel of claim 7, wherein the porous carbon has a nitrogen BET apparent surface area above about 2300 $m^2/g$ and a bulk density above about 0.25 $g/cm^3$ and is applied to the panel in the form of pellets.

12. The panel of claim 7, wherein the porous carbon has a nitrogen BET apparent surface area above about 2300 $m^2/g$, a bulk density greater than about 0.25 $g/cm^3$ and a cage-like structure which contributes to over 60% of its surface, as measured by phase contrast high resolution microscopy, and wherein the porous carbon is applied to the panel in the form of pellets.

13. The panel of claim 12, wherein the panel is a cylindrical surface.

Fig.1
PRIOR ART

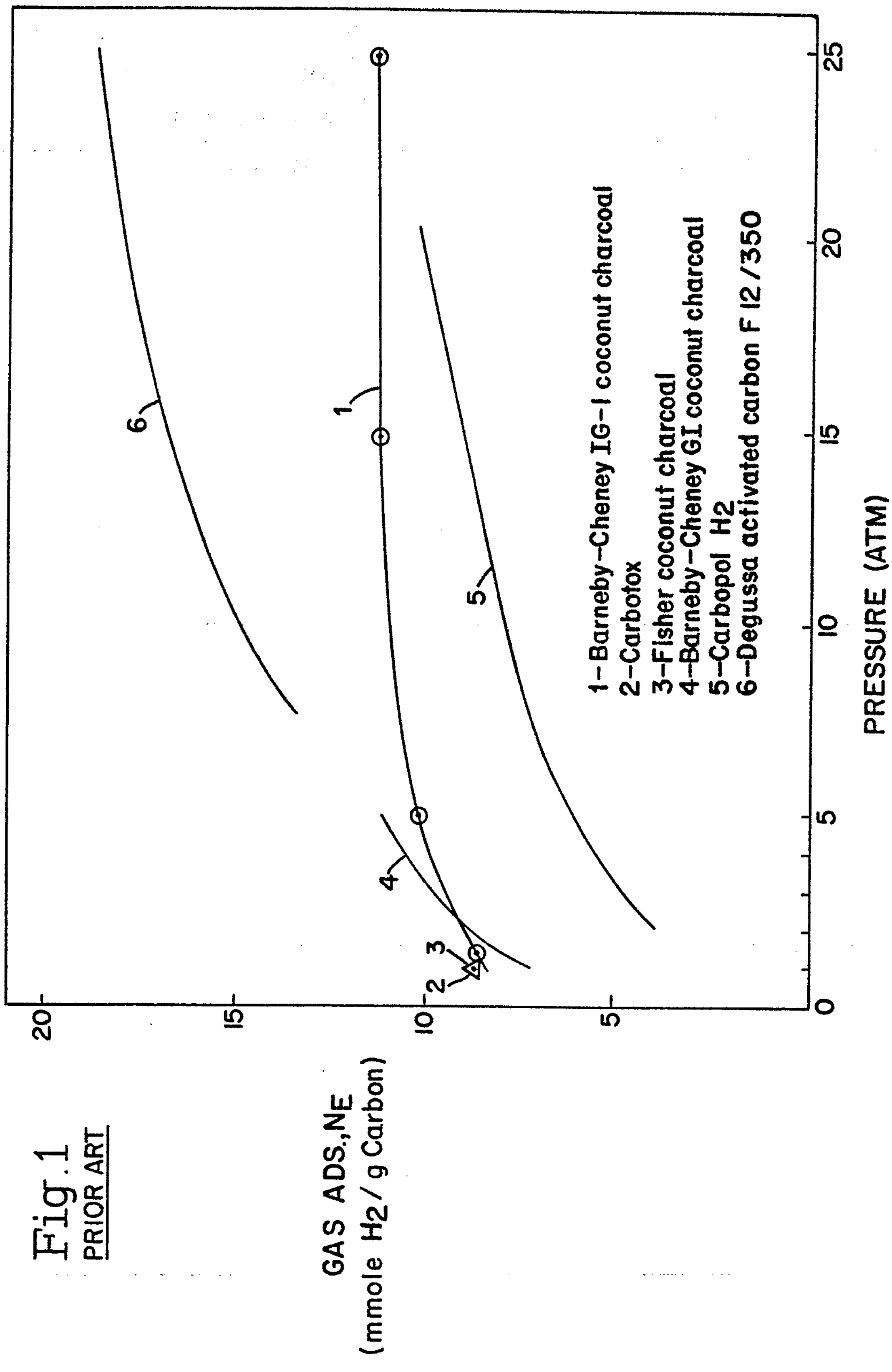

Fig.2

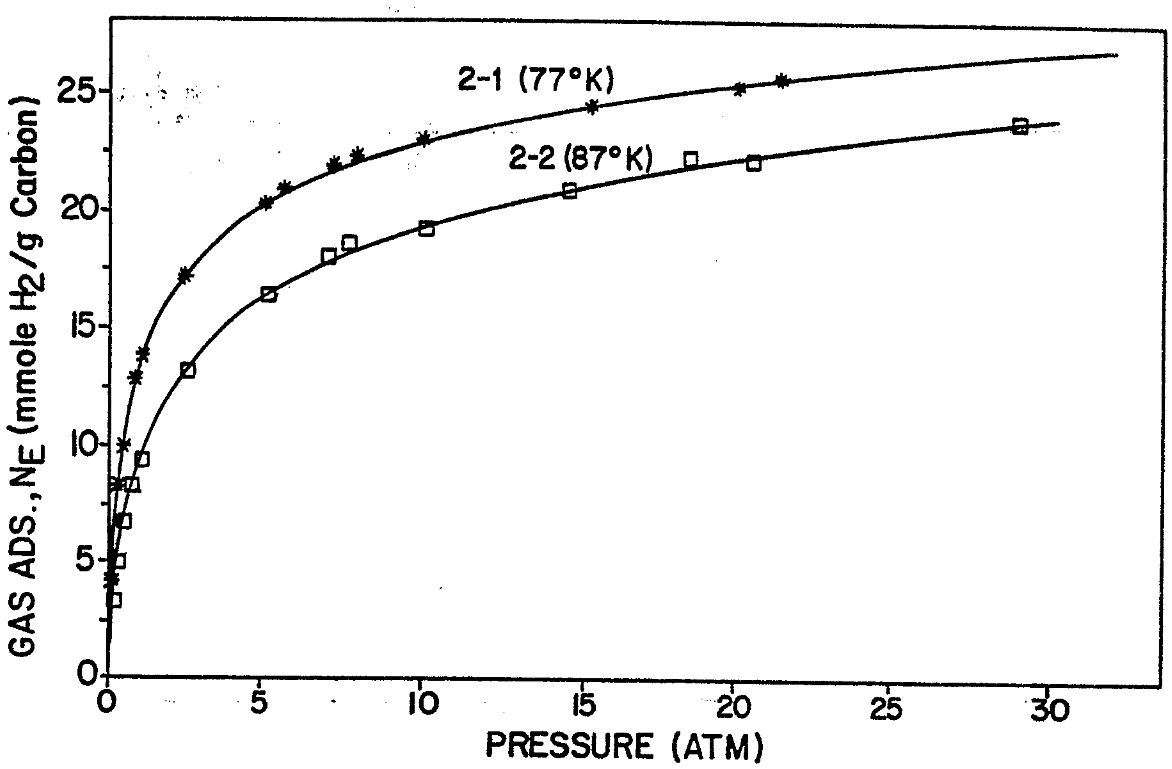
2-1 (77°K)
2-2 (87°K)
GAS ADS., $N_E$ (mmole $H_2$/g Carbon)
PRESSURE (ATM)
0
5
10
15
20
25
30

Fig.3

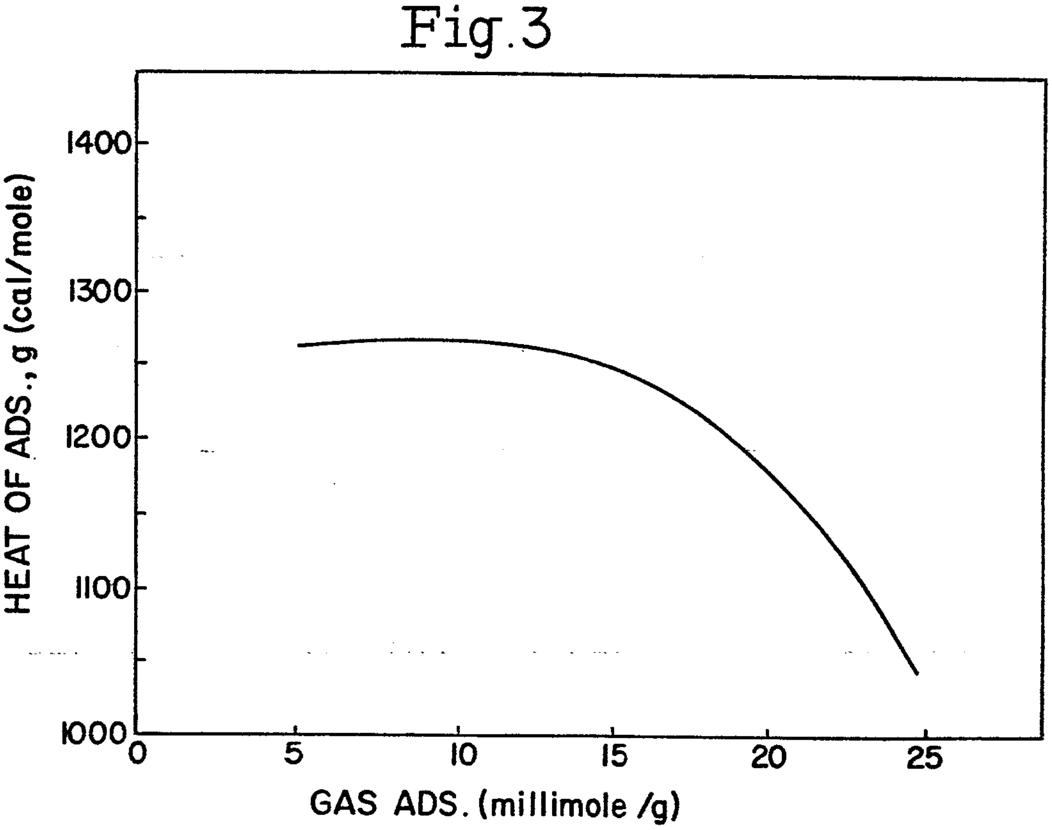
HEAT OF ADS., g (cal/mole)
1400
1300
1200
1100
1000
GAS ADS. (millimole /g)
0
5
10
15
20
25

Fig. 4

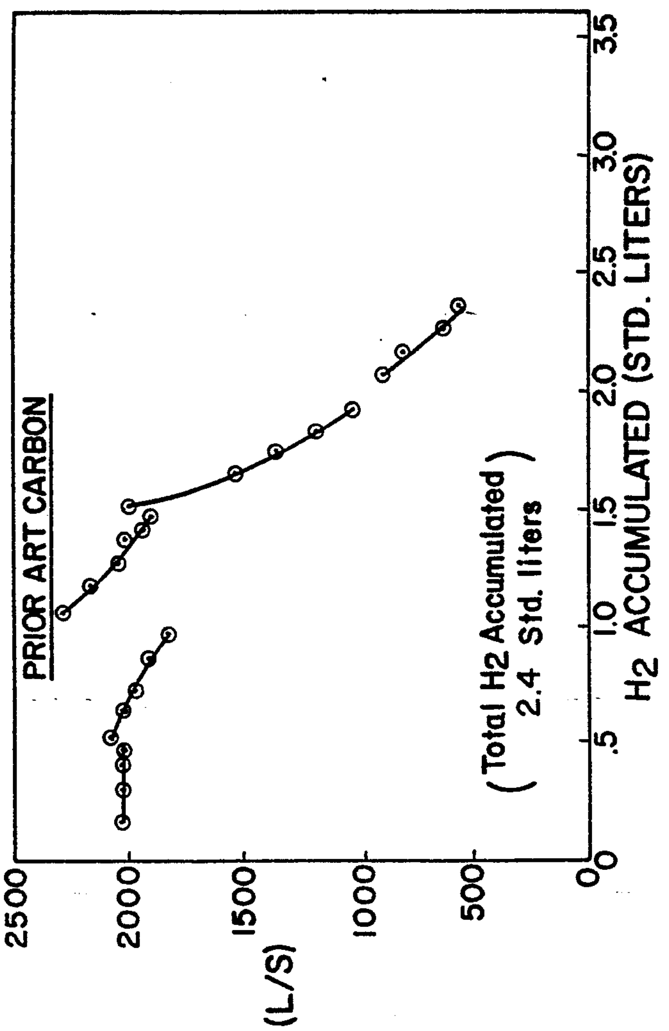
PRIOR ART CARBON
(Total H2 Accumulated 2.4 Std. liters)
H2 ACCUMULATED (STD. LITERS)
H2 SPEED, S'(L/S)
2500
2000
1500
1000
500
0
.5
1.0
1.5
2.0
2.5
3.0
3.5

Fig. 5

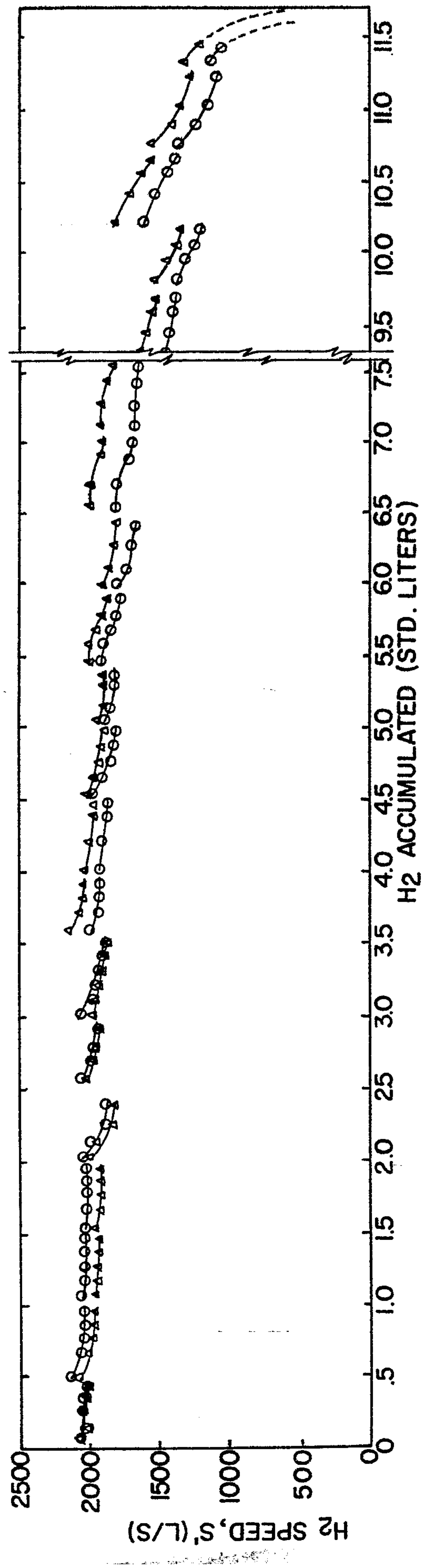
H2 ACCUMULATED (STD. LITERS)
H2 SPEED, S'(L/S)
2500
2000
1500
1000
500
0
.5
1.0
1.5
2.0
2.5
3.0
3.5
4.0
4.5
5.0
5.5
6.0
6.5
7.0
7.5
9.5
10.0
10.5
11.0
11.5